# EUROPÄISCHE PATENTSCHRIFT

(11) **EP 2 250 874 B1**
(45) Veröffentlichungstag und Bekanntmachung des Hinweises auf die Patenterteilung: **11.07.2012**
(21) Anmeldenummer: 10004668.9
(22) Anmeldetag: 04.05.2010
(51) Int. Cl.: A01D 78/10, A01D 78/12

(54) **Heuwerbungsmaschine**
Hay making machine
Machine de fenaison

(30) Priorität: 12.05.2009 DE 102009021002
(43) Veröffentlichungstag der Anmeldung: 17.11.2010
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- DE-A1- 1 944 225
- DE-A1- 1 954 574

## Beschreibung

Die Erfindung betrifft eine Heuwerbungsmaschine zum Zusammenrechen von am Boden liegenden landwirtschaftlichen Erntegut gemäß dem Oberbegriff des unabhängigen Anspruchs 1.

### Stand der Technik

Bekannt sind Heuwerbungsmaschinen, ausgebildet als Kreiselschwader, mit umlaufend angetriebenen, von einer Kurvenbahn gesteuerten Rechzinken, welche das am Boden liegende Erntegut zu einem Schwad zusammenrechen. Aus der DE 10 1806 061 A1 ist eine Heuwerbungsmaschine bekannt, deren Zinkenarme zweiteilig ausgebildet sind und die sich für den Straßentransport derart ineinander schieben lassen, dass sich der Kreiseldurchmesser als Ganzes gegenüber der Arbeitsstellung verkleinert. Dabei werden die Zinkenarme teleskopförmig ineinander geschoben und in ihrer jeweiligen Endlage werden die teleskopierbaren Teile des Zinkenarms gegeneinander verriegelt.

### Aufgabenstellung

Hier setzt die Erfindung an, mit dem Ziel, nicht nur eine Alternative, sondern zugleich eine verbesserte Ausführung eines Verstellmechanismus innerhalb großer Grenzen zur Verkleinerung eines Rechkreiselaußendurchmessers für die Transportstellung vorzuschlagen. Dabei soll auch eine Lösung zu mechanischen und fernbedienbaren zentralen Ansteuerung des Verstellmechnismus aufgezeigt werden.

### Lôsung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Indem die beiden Teile eines Zinkenarms, der radial 6 Teil und der radial innenliegende Teil 7 zwecks Kupplung nicht teleskopierbar ineinander gesteckt werden, sondern achsverschoben zueinander gehaltert und geführt werden, kann die Durchmesserverkleinerung des Rechkreisels auf besonders einfache Art innerhalb großer Grenzen erzeugt werden.

Anhand des nachfolgend dargestellten Ausführungsbeispiels und den zugehörigen Figurendarstellungen sind nähere Einzelheiten der Erfindung dargestellt und erläutert:

Es zeigen:
- Fig.1: Rechkreisel mit größtem Rechkreiseldurchmesser und mit der Zinkenarmstellung in Arbeitsstellung in perspektivischer Darstellung
- Fig.2: Rechkreisel mit größtem Rechkreiseldurchmesser und mit der Zinkenarmstellung in Arbeitsstellung in einer Draufsicht von oben.
- Fig.2a: Zinkenarmstellung in Arbeitsstellung gemäß Fig. 2.
- Fig.2b: Zinkenarmstellung in Arbeitsstellung gemäß Fig. 2a im gestreckten Zustand und in vergrößerter Darstellung und mit Feststelleinrichtung.
- Fig.2c: Einzelheit Y gemäß Fig. 2b in vergrößerter Darstellung mit Feststelleinrichtung.
- Fig.2d: Schnitt A-A gemäß Fig. 2b bzw. Fig.2c in vergrößerter Darstellung mit Feststelleinrichtung.
- Fig.2e: außenliegender Teil des Zinkenarms gemäß Fig. 2 in vergrößerter Darstellung
- Fig.2f: Ansicht X gemäß Fig.2e
- Fig.2g: Ansicht Y gemäß Fig.2e
- Fig.2h: vergrößerter Ausschnitt aus Fig.2f mit einem Schaft des Zinkenarms im Querschnitt ausgebildet als Zitronenhohlprofil.
- Fig.2j: vergrößerter Ausschnitt analog Fig.2h mit einem Schaft des Zinkenarms im Querschnitt ausgebildet als Sternhohlprofil
- Fig.3: Rechkreisel mit kleinstem Rechkreiseldurchmesser und mit der Zinkenarmstellung in Transportstellung in perspektivischer Darstellung
- Fig.4: Rechkreisel mit kleinstem Rechkreiseldurchmesser und mit der Zinkenarmstellung in Transportstellung in einer Draufsicht von oben.
- Fig.4a: Zinkenarmstellung in Arbeitsstellung gemäß Fig. 4 im zusammen geschobenen Zustand.
- Fig.4b: Zinkenarmstellung in Transportstellung gemäß Fig. 4a in vergrößerter Darstellung mit Feststelleinrichtung.
- Fig.4c: Zinkenarmstellung in voll ausgezogener Arbeitsstellung
- Fig.4d: Zinkenarmstellung in voll eingeschobener Transportstellung
- Fig.5: Verriegelungseinrichtung mit integrierter Verschwenkeinrichtung für den außenliegenden Teil.

- Fig.5a: Verriegelungseinrichtung mit integrierter Verschwenkeinrichtung gemäß Schnitt A-A in Fig.5 in Arbeitsstellung des außenliegenden Teils.
- Fig.5b: Verriegelungseinrichtung mit integrierter Verschwenkeinrichtung gemäß Schnitt A-A in Fig.5 in Transportsellung des außenliegenden Teils.
- Fig.6: Zinkenstellung in arretierter Arbeitsstellung.
- Fig.6a: Zinkenstellung in verschwenkter und arretierter Transportstellung.
- Fig.7: Zinkenarmstellung in voll ausgezogener Arbeitsstellung mit einer mechanisch betätigbaren Verschiebeeinrichtung.
- Fig.7a: Zinkenarmstellung in voll eingeschobener Transportstellung mit einer mechanisch betätigbaren Verschiebeeinrichtung.

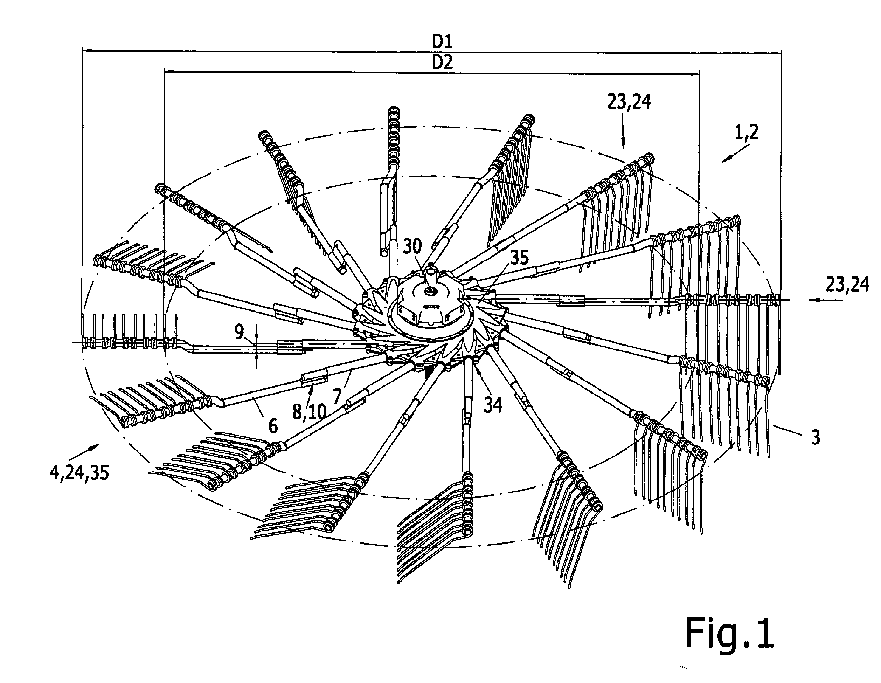

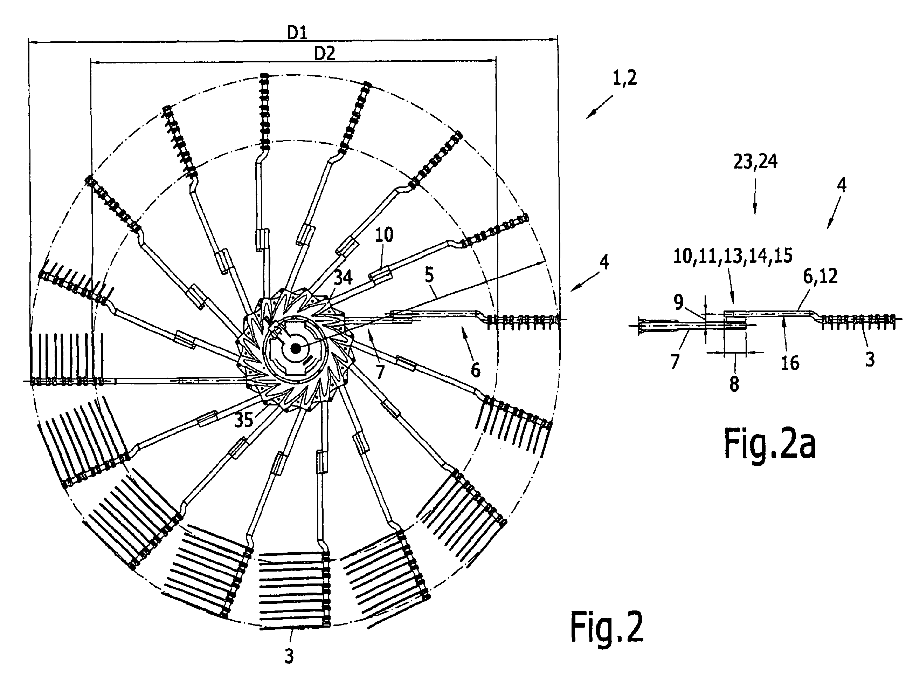

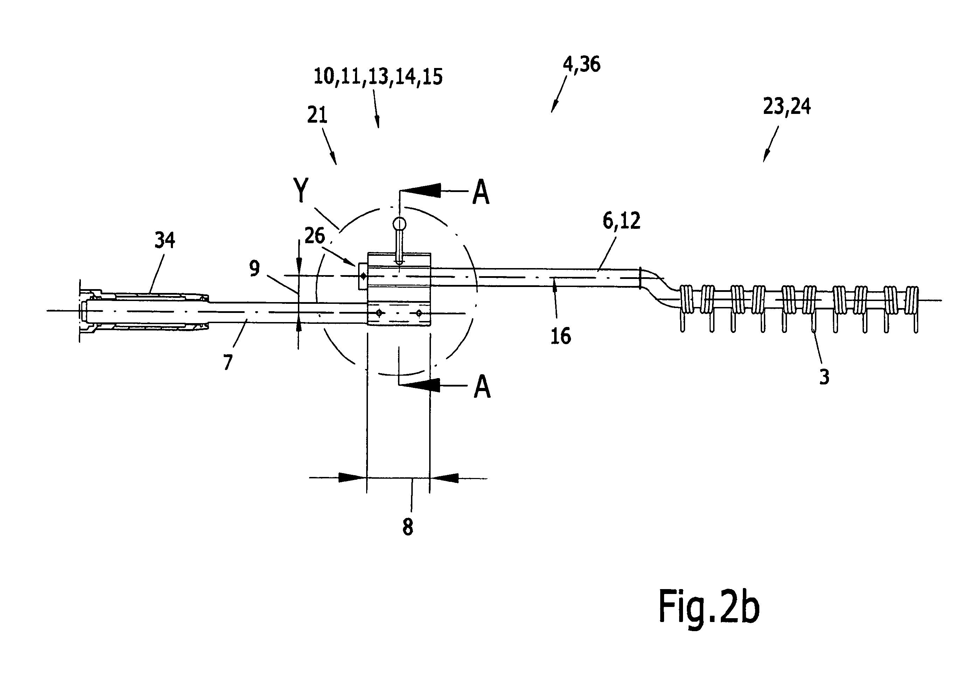

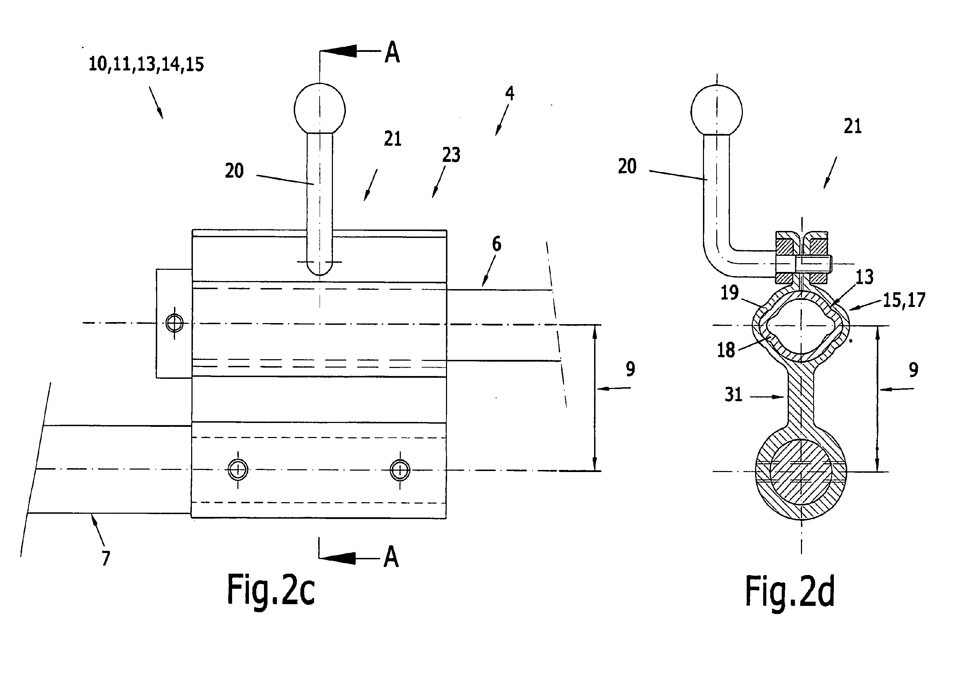

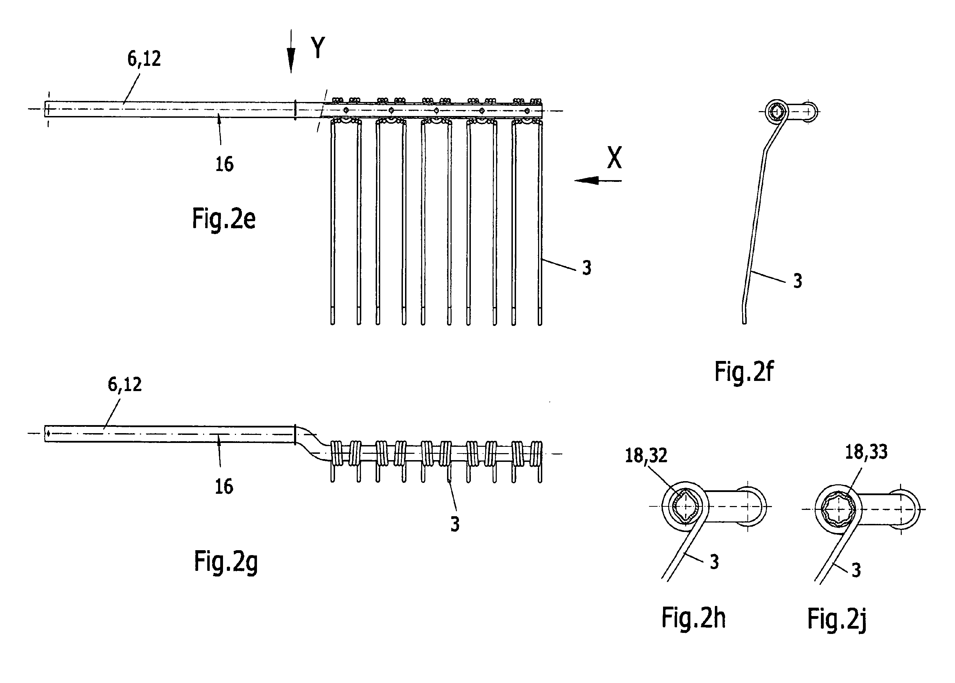

Fig.1 und Fig.2 zeigen einen erfindungsgemäßen Rechkreisel 1 einer Heuwerbungsmaschine mit einem Kreiselkörper 2 mit Rechzinken 3 bestückten Zinkenarmen 4 und einem Verstellmechanismus bzw. einer Verschiebeeinrichtung 27 zum Verstellen der radialen Längserstreckung 5 der Zinkenarme 4, wobei der Rechkreisel 1 um eine vertikale Kreiselachse 30 umlaufend angetrieben auf Stütz-und Tasträdern am Boden abgestützt ist und zum Zusammenrechen von am Boden liegenden landwirtschaftlichen Erntegut vorgesehen ist. Die Zinkenarme 4 aufweisenden Rechzinken 3 werden von einer dem Fachmann bekannten Kurvenbahn gesteuert. Fig.1 zeigt eine perspektivische Darstellung und Fig.2 zeigt den gleichen Rechkreisel mit größtem Rechkreiseldurchmesser und mit der Zinkenarmstellung 36 in Arbeitsstellung in einer Draufsicht von oben. Fig.2a zeigt gemäß Fig.1 und Fig. 2 einen der Zinkenarme eingebunden in die Lagerstelle 34 der Schwaderglocke 35 in der Zinkenarmstellung 36 mit voll ausgezogener Länge in der Arbeitsstellung 24 des Rechkreisels 1 und Fig.2b die Zinkenarmstellung 36 in Arbeitsstellung gemäß Fig. 2a im gestreckten Zustand und in vergrößerter Darstellung und mit einer Feststelleinrichtung 21. Fig.2c zeigt die Einzelheit Y gemäß Fig. 2b in einer vergrößerten Darstellung mit der Feststelleinrichtung 21 und Fig.2d zeigt den Schnitt A-A gemäß Fig. 2b bzw. Fig.2c in vergrößerter Darstellung ebenfalls mit der Feststelleinrichtung 21, mit dem Innenhohlprofil 18, welches von dem Außenhohlprofil 19 aufgenommen wird und welche mit dem Spannhebel 20 gegeneinander verspannt werden können, und Fig.2e zeigt den freigelegten und allein dargestellten außen liegenden Teil 6 des Zinkenarms gemäß Fig. 2 in vergrößerter Darstellung. Weiterhin zeigen zwecks genauerer Darstellung Fig.2f die Ansicht X gemäß Fig.2e, die Fig.2g die Ansicht Y gemäß Fig.2e, die Fig.2h einen vergrößerten Ausschnitt aus Fig.2f mit einem Schaft des Zinkenarms 4 im Querschnitt, wobei Fig.2h den Querschnitt als Zitronenhohlprofil 32 und Fig.2j den Querschnitt als Sternholprofil 33 eines Gelenkwellenprofils 17 beispielhaft darstellen.

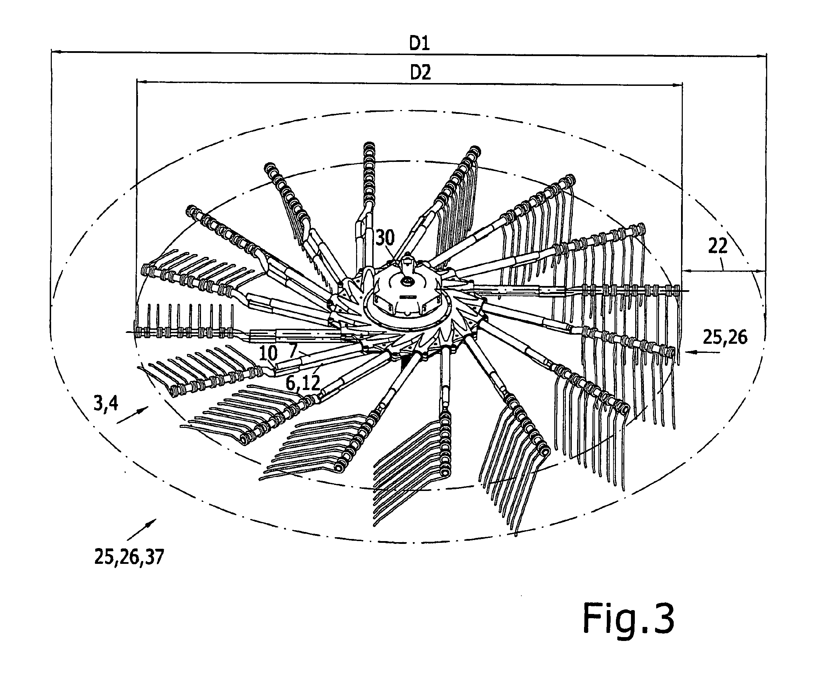

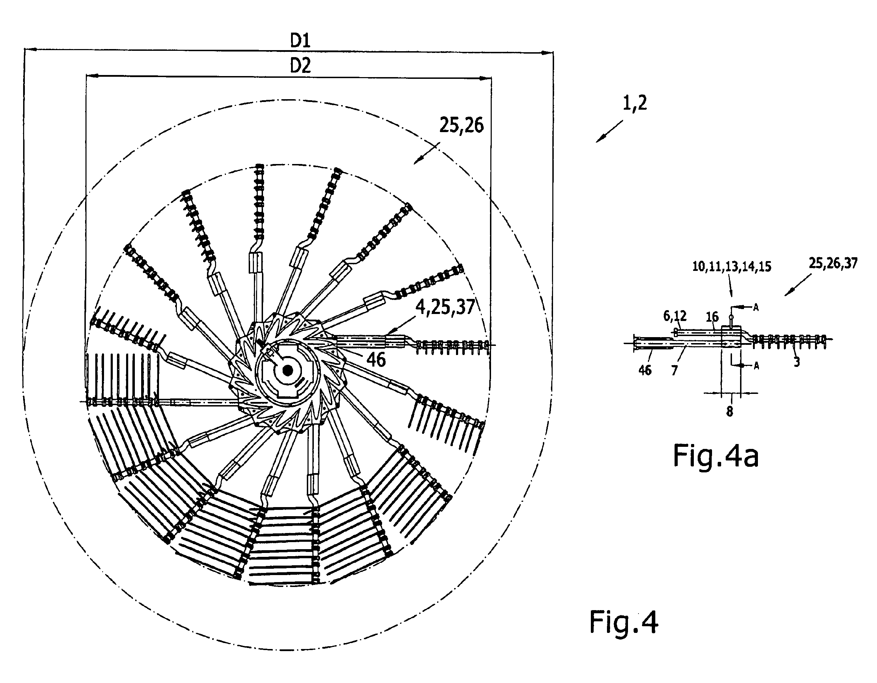

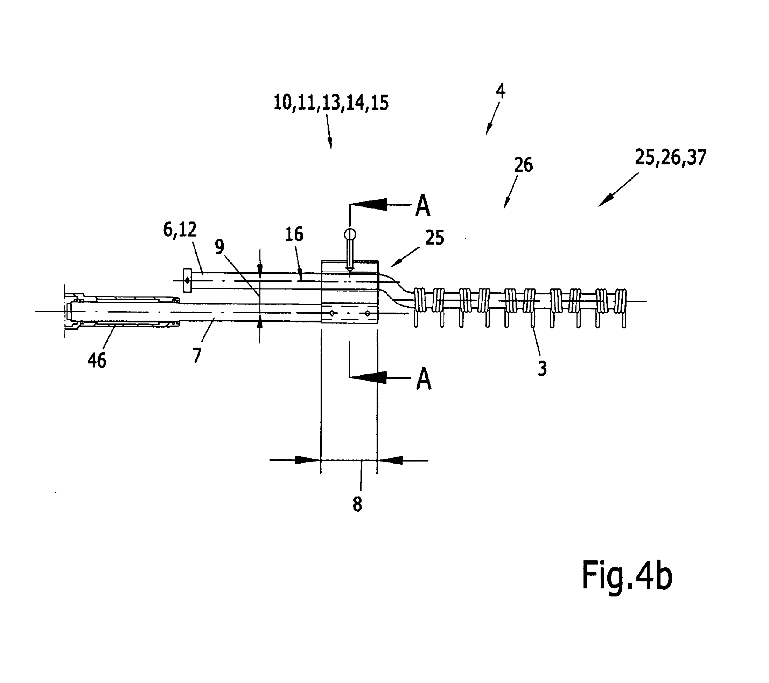

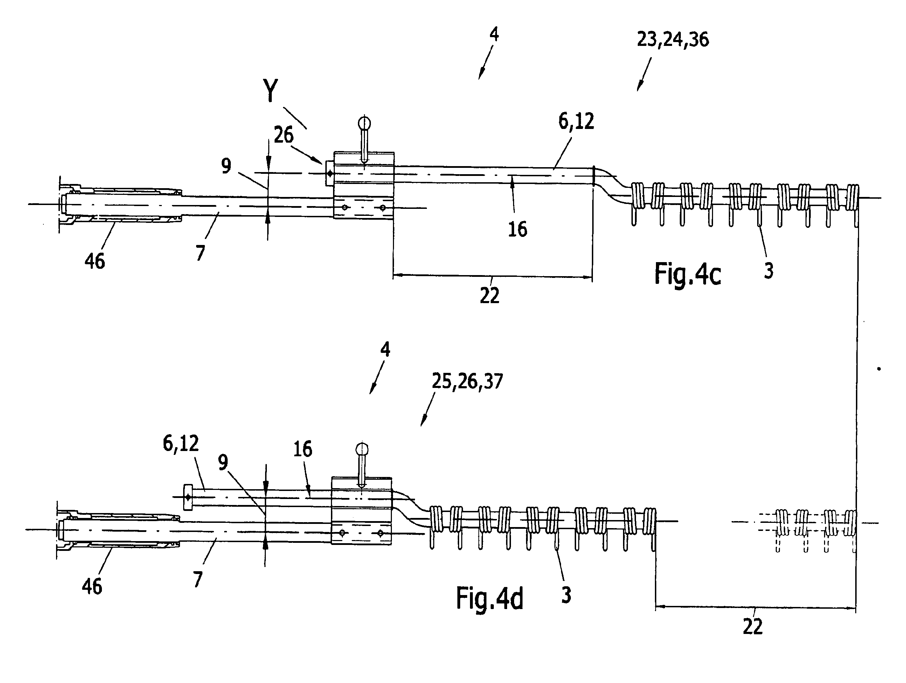

Fig.3 zeigt den einen Rechkreisel 1 gemäß Fig.1 nunmehr mit kleinstem Rechkreiseldurchmesser D2 und mit der Zinkenarmstellung 37 in Transportstellung in perspektivischer Darstellung und Fig.4 zeigt den Rechkreisel 1 gemäß Fig.3 mit kleinstem Rechkreiseldurchmesser D2 ebenfalls mit der Zinkenarmstellung 37 in Transportstellung in einer Draufsicht von oben. Fig.4a zeigt die Zinkenarmstellung 37 in Transportstellung gemäß Fig. 4 im zusammen geschobenen Zustand, Fig.4b gemäß Fig. 4a in vergrößerter Darstellung mit Feststelleinrichtung 21, Fig.4c die Zinkenarmstellung 36 in voll ausgezogener Arbeitsstellung 24 und Fig.4d die Zinkenarmstellung 37 in voll eingeschobener Transportstellung 26. Die Figuren Fig. 4c und Fig.4d wurden dabei vergleichend gegenüberliegend dargestellt, um die Wirkung der Verschiebeeinrichtung 27 weiter zu verdeutlichen.

Die Längserstreckung eines Zinkenarms 4 kann durch Verschiebung des radial außenliegenden Teils 6 relativ zum radial innenliegenden Teil 7 verändert werden, indem der radial außenliegende Teil 6 und der radial innenliegende Teil 7 einen radialen Überdeckungsbereich 8 mit einem axialen Querversatz 9 aufweisen. Der axiale Querversatz 9 ist Teil einer Halterung 10 mit einer Führung 11, einem Steg 31 und einer Feststelleinrichtung 21 für den radial außenliegenden Teil 6 und sie ist zugleich an dem radial innenliegenden Teil 7 befestigt und an diesem gehaltert. Dabei ist der Schaft 12 des außenliegenden Teils 6 des Zinkenarms 4 um dessen Längsachse 16 drehfest von dieser Halterung 10 aufgenommen und zugleich ist der Schaft 12 des außenliegenden Teils 6 des Zinkenarms 4 axialverschiebbar innerhalb dieser Halterung 10 geführt.

Die Aufnahmeöffnung 13 der Halterung 10 ist dabei als Prismenführung 14 derart ausgestaltet, dass die Prismenführung 14 zugleich als Verdrehsicherung 15 um die Längsachse 16 des Schaftes 12 des Zinkenarms 4 ausgestaltet ist und so den Schaft 12 des außen liegenden Teils 7 des Zinkenarms 4 formschlüssig umgreift. Die Prismenführung 14 ist vorzugsweise als Gelenkwellenprofil 17 mit Innen- und Außenprofil ausgestaltet, beispielsweise als Zitronenhohlprofil 32, Sternhohlprofil 33.

Die Prismenführung 14 weist zugleich eine Feststelleinrichtung 21 auf, welche die axiale Beweglichkeit bzw. radiale Verschiebung 22 des außen liegenden Teils 6 ermöglichen oder aufheben kann, um somit die radiale Verschiebung in Richtung größerer D1 oder kleiner Rechkreiseldurchmesser D2 zu ermöglichen.

Die Halterung 10 als Prismenführung 14 nimmt somit eine Doppelfunktion ein, und zwar einerseits die Verdrehung relativ zur Halterung 10 des außenliegenden Teils 6 des Zinkenarms 4 zu verhindern und andererseits die radiale Verschiebung 22 zu ermöglichen, bzw. diese auch durch eine Feststelleinrichtung 21 zu unterbinden. Dabei weist die Prismenführung 14 eine stufenlose Feststelleinrichtung 21 auf, die eine erste Endstellung 23 des außenliegenden Teils 6 als Arbeitsstellung 24 und eine zweite Endstellung 25 als Transportstellung 26 fixiert.

Um das Massenträgheitsmoment des Zinkenarms während der Umsteuerung der Rechzinken von der Rechstellung in die ausgehobene Stellung zu minimieren, ist der radial außenliegende Teil 6 des Zinkenarms 4 mit einer Kröpfung als axialer Querversatz 9 ausgestaltet. Vorteilhafterweise ist das Kröpfungsmaß des radial außenliegenden Teils 6 des Zinkenarms 4 so gewählt, dass dieses etwa dem axialen Querversatz 9 entspricht.

Somit ist der Rechkreiseldurchmesser D1 in der Arbeitsstellung 24 größer als der Rechkreiseldurchmesser D2 in der Transportstellung 26. Beispielsweise liegt der Rechkreiseldurchmesser D1 in der Arbeitsstellung 24 etwa im Bereich zwischen 4,0m und 5,0 m und vorzugsweise etwa 4,5m und der Quotient aus kleinster Rechkreiseldurchmesser D2 dividiert durch größter Rechkreiseldurchmesser D1 liegt etwa bei einem Wert innerhalb des Bereichs von etwa 0.9 bis 0,6 und vorzugsweise etwa bei 0,75 ± 0,25.

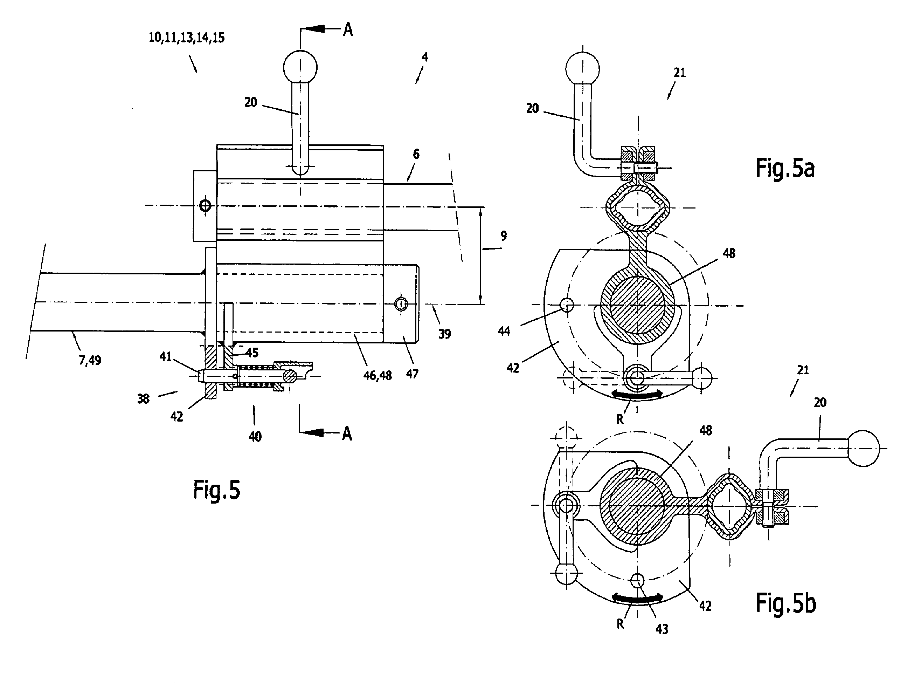

Die Figuren Fig.5 und Fig.5a und Fig.5b zeigen eine weitere Ausgestaltung der Erfindung mit einer Schwenkvorrichtung 38 zur Verschwenkung des außenliegenden Teils 6 des Zinkenarms 4 mit einer Drehbewegung R um etwa 90° um die Längsachse 16 bzw. Schwenkachse 39 des innen liegenden Teils 7. Dazu ist die gesamte Feststelleinrichtung 21 nunmehr drehbar um die Schwenkachse 39 auf dem Schaft 49 des innen liegenden Teils 7 in einer Lagerstelle 46 gelagert und gegen axiale Verrückung zum einen durch das Segmentblech 42, welches mit dem Schaft 49 verschweißt ist und zum anderen durch einen Bund 47, der mit dem Schaft 49 verstiftet ist, gesichert. Die Feststelleinrichtung 21 und die Schnappverriegelung 40 bilden eine Einheit, die mittels einer Halterung 45 fest mit der Nabe 48 der Feststelleinrichtung 21 verbunden ist. Die Schnappverriegelung 40 umfasst einen Feder vorgespannten Schnappriegelbolzen 41, welcher wahlweise in die Absteckbohrungen 43 oder 44 des Segmentblechs 42 eingreift. Indem der Schnappriegelbolzen 41 in seine Entsperrstellung verbracht wird, kann die gesamte Feststelleinrichtung 21 und damit zugleich der außenliegende Teil 6 mit dessen Rechzinken 3 um die Schwenkachse 39 der Lagerstelle 46 eine Drehbewegung im Sinne eine Verschwenkbewegung ausführen. Indem der Schnappriegelbolzen 41 in eine der Absteckbohrungen 43 oder 44 eingreift, kann die Lage der Feststelleinrichtung 21 und damit die Lage des äußeren Teils 6 des Zinkenarms 4 in Bezug auf die Schwenkachse 39 der Lagerstelle 46 arretiert werden.

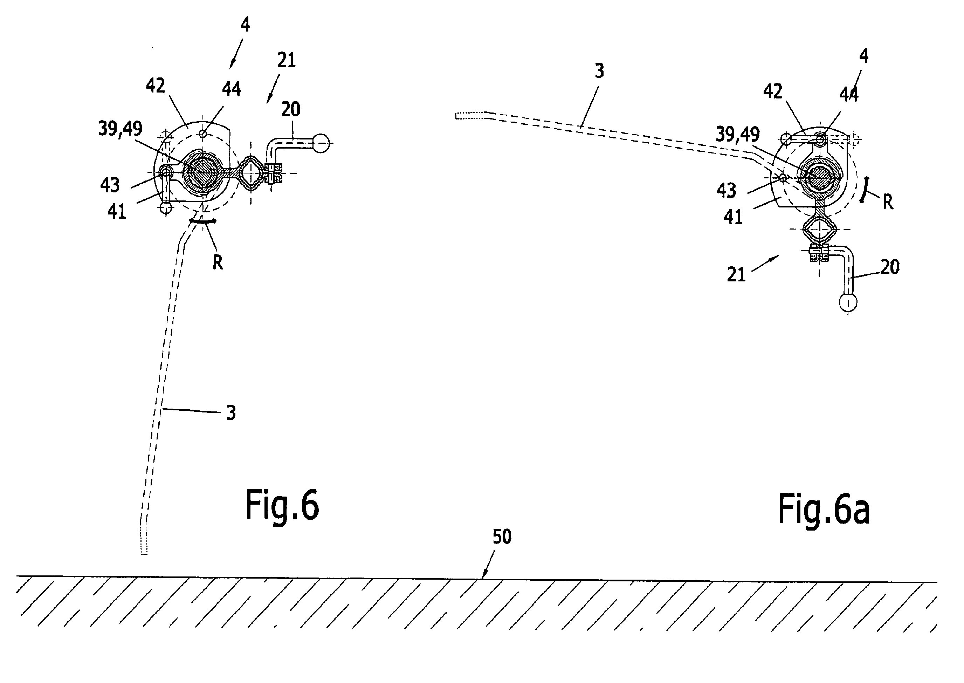

Fig.6 zeigt die Lage der Feststelleinrichtung 21 und damit die Ausrichtung des äußeren Teils 6 und dessen Rechzinkenstellung in Bezug auf die Schwenkachse 39 und damit zugleich auf den Boden 50 als Aufstandsfläche eines Rechkreisels 1 in arretierter Arbeitsteilung und Fig.6a zeigt analog die arretierte Sperrstellung der Feststelleinrichtung 21 in Bezug auf die Schwenkachse 39 und in Bezug auf die Transportstellung 26.

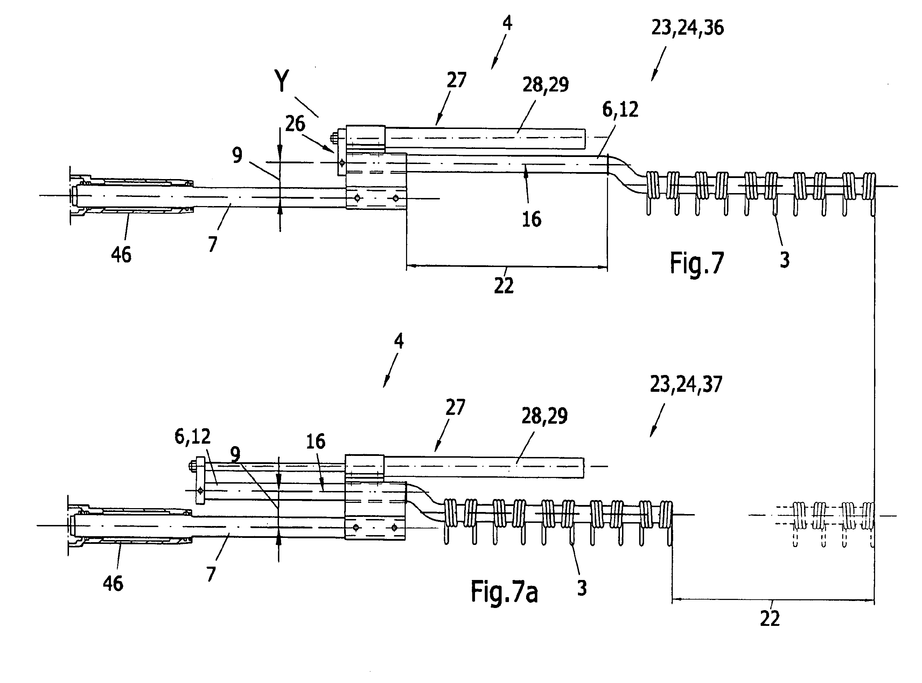

Die Figuren Fig.7 und Fig.7a zeigen eine weitere Ausgestaltung der Erfindung mit einer mechanischen Verschiebeeinrichtung 27, ausgebildet mit einem Verstellantrieb 28. Dieser kann beispielsweise als Druckmittelzylinder 29 ausgebildet sein.

Fig.7 zeigt eine Zinkenarmstellung 36 in voll ausgezogener Arbeitsstellung mit einer mechanisch betätigbaren Verschiebeeinrichtung 27 und Fig.7a eine Zinkenarmstellung 37 in voll eingeschobener Transportstellung 26 mit einer mechanisch betätigbaren Verschiebeeinrichtung 27, wobei der Verstellantrieb 28 als Druckmittelzylinder 29 ausgebildet ist. Erfindungsgemäß kann eine Verschiebeeinrichtung 27 zur radialen Verschiebung 22 des außenliegenden Teils 6 zwecks Durchmesservergrößerung auf D1 bzw Durchmesserverkleinerung D2 innerhalb der Rechkreiseldurchmesser D1, D2 auch einen mechanischen Verstellantrieb 28 aufweisen, der beispielsweise ausgeführt als Druckmittelzylinder 29 hydraulisch oder pneumatisch betätigbar sein kann. Alternativ ist auch ein elektrisch betätig barer Verstellantrieb 28 möglich.

Dazu weist der Rechkreisel 1 eine Drehdurchführung um die Kreiselachse 30 zur Übertragung der Energieversorgung auf, die je nach Auslegung der Art der Energie ein Druckfluidübertragungselement, oder ein elektrisches Übertragungselement mit Schleifringkontakten sein kann.

Der Verstellantrieb 28 kann als Linearmotor bzw. Hydraulik- oder Pneumatikstellzylinder, oder beispielsweise auch als elektrisch, hydraulisch oder pneumatisch angetriebener Getriebemotor mit Zahnstangen oder Spindelantrieb ausgebildet sein.

in besonders vorteilhafter Ausgestaltung der Erfindung kann das Gelenkwellenprofil 17 des Schafts 12 des außenliegenden Teils 6 über einen Teil seiner Längserstreckung nach dem Prinzip eines Drillspindel um die Figurenachse des Schafts 12 gewendelt sein, so das während der Längsverschiebung im Sinn der radialen Verschiebung 22 des außenliegenden Teils 6 der gesamte außenliegenden Teils 6 durch Drehung um die Längsachse 16 gleichzeitig entsprechend verschwenkt wird.

Es liegt im Wesen der Erfindung, dass der mechanische Verstellantrieb 28 auch von einer zentralen Steuerung der Heuwerbungsmaschine und fernbedienbar aus der Fahrerkabine eines Zugfahrzeugs oder eines Selbstfahrers heraus angesteuert und betätigt werden kann.

### Bezugszeichenliste

- 1: Rechkreisel
- 2: Kreiselkörper
- 3: Rechzinken
- 4: Zinkenarm
- 5: radiale Längserstreckung
- 6: außen liegender Teil
- 7: innen liegender Teil
- 8: radialer Überdeckungsbereich
- 9: axialer Querversatz
- 10: Halterung
- 11: Führung
- 12: Schaft
- 13: Aufnahmeöffnung
- 14: Prismenführung
- 15: Verdrehsicherung
- 16: Längsachse
- 17: Gelenkwellenprofil, Vielkeilprofil
- 18: Innenhohlprofil
- 19: Außenhohlprofil
- 20: Spannhebel
- 21: Feststelleinrichtung
- 22: radiale Verschiebung
- 23: erste Endstellung
- 24: Arbeitsstellung
- 25: zweite Endstellung
- 26: Transportstellung
- 27: Verschiebeeinrichtung
- 28: Verstellantrieb
- 29: Druckmittelzylinder
- 30: Kreiselachse
- 31: Steg
- 32: Zitronenhohlprofil
- 33: Sternhohlprofil
- 34: Lagerstelle
- 35: Schwaderglocke
- 36: Zinkenarmstellung voll ausgezogen in Arbeitsstellung
- 37: Zinkenarmstellung voll eingefahren in Transportstellung
- 38: Schwenkvorrichtung
- 39: Schwenkachse
- 40: Verriegelungsvorrichtung, Schnappverriegelung
- 41: Schnappriegelbolzen
- 42: Segmentblech
- 43: Absteckbohrung
- 44: Absteckbohrung
- 45: Halterung
- 46: Lagerstelle
- 47: Bund
- 48: Nabe
- 49: Schaft
- 50: Boden, Aufstandsfläche

- D1: Rechkreiseldurchmesser (D1)
- D2: Rechkreiseldurchmesser (D2)
- R: Drehbewegung

## Patentansprüche

1. Heuwerbungsmaschine mit wenigstens einem Rechkreisel (1) aufweisenden Kreiselkörper (2) mit wenigstens einem Rechzinken (3) bestückten Zinkenarm (4), wobei der wenigstens eine Rechkreisel um eine vertikale Achse umlaufend angetrieben auf Stütz- und Tasträdern am Boden abgestützt ist und zum Zusammenrechen von am Boden liegenden landwirtschaftlichen Erntegut vorgesehen ist, und wobei die im Wesentlichen radiale Längserstreckung eines Zinkenarms durch Verschiebung des radial außenliegenden Teils (6) relativ zum radial innenliegenden Teil (7) veränderbar ist, **dadurch gekennzeichnet, dass** der radial außenliegende Teil (6) und der radial innenliegende Teil (7) mittels einer Halterung (10) lösbar miteinander verbunden sind und die Halterung (10) einen axialen Querversatz (9) aufweist, derart, dass beide Teile des Zinkenarms (4) achsversckoben zueinander gehaltert und geführt werden.

2. Heuwerbungsmaschine nach Anspruch 1, **dadurch gekennzeichnet, dass** der axiale Querversatz (9) Teil einer Halterung (10) mit einer Führung (11) und einer Feststelleinrichtung (21) für den radial außenliegenden Teil (6) ist.

3. Heuwerbungsmaschine nach Anspruch 1, **dadurch gekennzeichnet, dass** die Halterung (10) einen radialen Überdeckungsbereich (8) für die Schäfte (12,49) des innenliegenden und außenliegenden Teils (6,7) eines Zinkenarms (4) aufweist.

4. Heuwerbungsmaschine nach Anspruch 1, **dadurch gekennzeichnet, dass** die Halterung (10) von dem radial innenliegenden Teil (7) des Zinkenarms (4) drehfest aufgenommen wird.

5. Heuwerbungsmaschine nach Anspruch 1, **dadurch gekennzeichnet, dass** der Schaft (12) des außenliegenden Teils des Zinkenarms (4) drehfest von der Halterung (10) geführt und gehaltert wird.

6. Heuwerbungsmaschine nach Anspruch 1, **dadurch gekennzeichnet, dass** der Schaft (12) des außenliegenden Teils (6) des Zinkenarms (4) axialverschiebbar von der Halterung (10) aufgenommen und gehaltert wird.

7. Heuwerbungsmaschine nach Anspruch 6, **dadurch gekennzeichnet, dass** die Führung (11) der Halterung (10) eine Aufnahmeöffnung (13) aufweist, die als Prismenführung (14) ausgestaltet ist.

8. Heuwerbungsmaschine nach Anspruch 6, **dadurch gekennzeichnet, dass** die Prismenführung (14) zugleich als Verdrehsicherung (15) um die Längsachse (16) des Schaftes (12) des Zinkenarms (4) ausgestaltet ist.

9. Heuwerbungsmaschine nach Anspruch 6, **dadurch gekennzeichnet, dass** die Prismenführung (14) den Schaft (12) des außen liegenden Teils (6) des Zinkenarms (4) formschlüssig umgreift.

10. Heuwerbungsmaschine nach Anspruch 6, **dadurch gekennzeichnet, dass** die Prismenführung (14) als an sich bekanntes Gelenkwellenprofil (17) oder Vielkeilprofil ausgestaltet ist.

11. Heuwerbungsmaschine nach Anspruch 10,**dadurch gekennzeichnet, dass** der Schaft (12) des außenliegenden Teils (6) als Gelenkwellenprofil (17) ausgestaltet ist.

12. Heuwerbungsmaschine nach Anspruch 10,**dadurch gekennzeichnet, dass** das Gelenkwellenprofil (17) als Zitronenhohlprofil (32) oder Sternprofil (33) oder Vielkeilprofil, ausgestaltet ist.

13. Heuwerbungsmaschine nach Anspruch 10,**dadurch gekennzeichnet, dass** das Gelenkwellenprofil (17) des Schafts (12) des außenliegenden Teils (6) über einen Teil seiner Längserstreckung im Sinne einer Drillspindel gewendelt ist..

14. Heuwerbungsmaschine nach Anspruch 6, **dadurch gekennzeichnet, dass** die Halterung (10) in Verbindung mit der Prismenführung (14) eine Feststelleinrichtung (21) gegen die radiale Verschiebung (22) des außenliegenden Teils (6) des Zinkenarms (4) aufweist.

15. Heuwerbungsmaschine nach Anspruch 6, **dadurch gekennzeichnet, dass** die Prismenführung (14) als eine stufenlose Feststelleinrichtung (21) ausgestaltet ist.

16. Heuwerbungsmaschine nach Anspruch 6, **dadurch gekennzeichnet, dass** die Prismenführung (14) eine erste Endstellung (23) als Arbeitsstellung (24) und zweite Endstellung (25) als Transportstellung (26) aufweist.

17. Heuwerbungsmaschine nach Anspruch 1 und 6, **dadurch gekennzeichnet, dass** wenigstens ein Zinkenarm (4) eine Verschiebeeinrichtung (27) zur radialen Verschiebung (22) des außenliegenden Teils (6) einen Verstellantrieb (28) aufweist.

18. Heuwerbungsmaschine nach Anspruch 17, **dadurch gekennzeichnet, dass** der Verstellantrieb (28) als fluidbeaufschlagbarer Druckmittelzylinder (29) ausgebildet ist.

19. Heuwerbungsmaschine nach Anspruch 17, **dadurch gekennzeichnet, dass** der Verstellantrieb (28) elektrisch betätigbar ist.

20. Heuwerbungsmaschine nach Anspruch 17, **dadurch gekennzeichnet, dass** der Verstellantrieb (28) als Getriebemotor ausgebildet ist.

21. Heuwerbungsmaschine nach Anspruch 1 und 6, **dadurch gekennzeichnet, dass** der Rechkreisel (1) einen zentralen Verstellantrieb aufweist.

22. Heuwerbungsmaschine nach Anspruch 1 und 6, **dadurch gekennzeichnet, dass** der Rechkreisel (1) eine Drehdurchführung um die Kreiselachse (30) zur Übertragung der Energieversorgung aufweist.

23. Heuwerbungsmaschine nach Anspruch 22, **dadurch gekennzeichnet, dass** die Drehdurchführung zur Energieversorgung als Druckfluid-Übertragungselement ausgebildet ist.

24. Heuwerbungsmaschine nach Anspruch 22, **dadurch gekennzeichnet, dass** die Drehdurchführung zur Energieversorgung als elektrisches Übertragungselement mit wenigstens einem Schleifringkontakt ausgebildet ist.

25. Heuwerbungsmaschine nach Anspruch 1 und 6, **dadurch gekennzeichnet, dass** der radial außenliegende Teil (6) des Zinkenarms (4) einen axialen Querversatz (9) aufweist.

26. Heuwerbungsmaschine nach Anspruch 25, **dadurch gekennzeichnet, dass** das Kröpfungsmaß (34) des radial außenliegenden Teils (6) des Zinkenarms (4) etwa dem axialen Querversatz (9) entspricht.

27. Heuwerbungsmaschine nach Anspruch 1 und 6, **dadurch gekennzeichnet, dass** wenigstens ein Zinkenarm (4) eine Schwenkvorrichtung (38) zum Verdrehen des außenliegenden Teils (6) des Zinkenarms (4) relativ zur Längserstreckung des Schafts (49) des innenliegenden Teils (7) aufweist.

28. Heuwerbungsmaschine nach Anspruch 27, **dadurch gekennzeichnet, dass** die Schwenkachse (39) der Schwenkvorrichtung (38) identisch ist mit der Figurenachse des Schafts (49) des innenliegenden Teils (7).

29. Heuwerbungsmaschine nach Anspruch 27, **dadurch gekennzeichnet, dass** die Schwenkvorrichtung (38) eine Verriegelungsvorrichtung (40) zur Freigabe der Schwenkbewegung oder zur Arretierung der Schwenkvorrichtung (38) aufweist.

30. Heuwerbungsmaschine nach Anspruch 1 und 6, **dadurch gekennzeichnet, dass** wenigstens ein Zinkenarm (4) eine Schwenkvorrichtung (38) zum Verdrehen des außenliegenden Teils (6) des Zinkenarms (4) relativ zur Längserstreckung des Schafts (12) des außenliegenden Teils (6) aufweist.

31. Heuwerbungsmaschine nach Anspruch 30, **dadurch gekennzeichnet, dass** das Gelenkwellenprofil (17) des Schafts (12) des außenliegenden Teils 6 über einen Teil seiner Längserstreckung nach dem Prinzip eines Drillspindel gewendelt ist und das während der Längsverschiebung im Sinn der radialen Verschiebung (22) des außenliegenden Teils (6) der gesamte außenliegenden Teils (6) durch Drehung um die Längsachse (16) gleichzeitig entsprechend verschwenkt wird

32. Heuwerbungsmaschine nach Anspruch 1 und 6, **dadurch gekennzeichnet, dass** der Rechkreiseldurchmesser (D1) in der Arbeitsstellung (24) größer ist als der Rechkreiseldurchmesser (D2) in der Transportstellung (26).

33. Heuwerbungsmaschine nach Anspruch 1 und 6,**dadurch gekennzeichnet, dass** der Rechkreiseldurchmesser (D1) in der Arbeitsstellung (24) etwa im Bereich zwischen 4,0m und 5,0 m liegt und vorzugsweise etwa 4,5m beträgt.

34. Heuwerbungsmaschine nach Anspruch 1 und 6,**dadurch gekennzeichnet, dass** der Quotient aus kleinster Rechkreiseldurchmesser (D2) dividiert durch größter Rechkreiseldurchmesser (D1) einen Wert innerhalb des Bereichs von etwa 0.9 bis 0,6 liegt und vorzugsweise etwa 0,75 ± 0,25 beträgt.

35. Heuwerbungsmaschine nach Anspruch 1 und 6,**dadurch gekennzeichnet, dass** der mechanische Verstellantrieb (28) von einer zentralen Steuerung der Heuwerbungsmaschine fernbedienbar aus der Fahrerkabine eines Zugfahrzeugs oder eines Selbstfahrers heraus angesteuert und betätigt werden kann.

## Claims

1. A hay making machine comprising at least one rake rotor (1) having a rotor body (2) with at least one tine arm (4) fitted with a rake tine (3), wherein the at least one rake rotor is supported on the ground on support and contact wheels and driven in rotation about a vertical axis and is provided for raking together agricultural crop material lying on the ground, and wherein the substantially radial longitudinal extent of a tine arm is variable by displacement of the radially outward portion (6) relative to the radially inward portion (7), **characterised in that** the radially outward portion (6) and the radially inward portion (7) are releasably connected together by means of a holding means (10) and the holding means (10) has an axial transverse displacement (9) such that both portions of the tine arm (4) are held and guided in axis-displaced mutual relationship.

2. A hay making machine according to claim 1 **characterised in that** the axial transverse displacement (9) is part of a holding means (10) having a guide means (11) and a fixing device (21) for the radially outward portion (6).

3. A hay making machine according to claim 1 **characterised in that** the holding means (10) has a radial overlap region (8) for the shafts (12, 49) of the inward and outward portions (6, 7) of a tine arm (4).

4. A hay making machine according to claim 1 **characterised in that** the holding means (10) is non-rotatably mounted by the radially inward portion (7) of the tine arm (4).

5. A hay making machine according to claim 1 **characterised in that** the shaft (12) of the outward portion of the tine arm (4) is non-rotatably guided and held by the holding means (10).

6. A hay making machine according to claim 1 **characterised in that** the shaft (12) of the outward portion (6) of the tine arm (4) is axially displaceably received and held by the holding means (10).

7. A hay making machine according to claim 6 **characterised in that** the guide means (11) of the holding means (10) has a receiving opening (13) in the form of a prism guide means (14).

8. A hay making machine according to claim 6 **characterised in that** the prism guide means (14) is at the same time in the form of a rotation-preventing means (15) about the longitudinal axis (16) of the shaft (12) of the tine arm (4).

9. A hay making machine according to claim 6 **characterised in that** the prism guide means (14) embraces the shaft (12) of the outward portion (6) of the tine arm (4) in positively locking relationship.

10. A hay making machine according to claim 6 **characterised in that** the prism guide means (14) is in the form of a per se known universal-joint shaft profile member (17) or spline profile member.

11. A hay making machine according to claim 10 **characterised in that** the shaft (12) of the outward portion (6) is in the form of a universal-joint shaft profile member (17).

12. A hay making machine according to claim 10 **characterised in that** the universal-joint shaft profile member (17) is in the form of a hollow lemon-shaped profile member (32) or star profile member (33) or spline profile member.

13. A hay making machine according to claim 10 **characterised in that** the universal-joint shaft profile member (17) of the shaft (12) of the outward portion (6) is twisted over a part of its longitudinal extent in the fashion of a drill spindle.

14. A hay making machine according to claim 6 **characterised in that** the holding means (10) in conjunction with the prism guide means (14) has a fixing device (21) to prevent radial displacement (22) of the outward portion (6) of the tine arm (4).

15. A hay making machine according to claim 6 **characterised in that** the prism guide means (14) is in the form of a stepless fixing device (21).

16. A hay making machine according to claim 6 **characterised in that** the prism guide means (14) has a first end position (23) as a working position (24) and a second end position (25) as a transport position (16).

17. A hay making machine according to claims 1 and 6 **characterised in that** at least one tine arm (4) has a displacement device (27) for radial displacement (22) of the outward portion (6) as an adjusting drive (28).

18. A hay making machine according to claim 17 **characterised in that** the adjusting drive (28) is in the form of a fluid-actuable pressure medium cylinder (29).

19. A hay making machine according to claim 17 **characterised in that** the adjusting drive (28) is electrically actuable.

20. A hay making machine according to claim 17 **characterised in that** the adjusting drive (28) is in the form of a gear motor.

21. A hay making machine according to claims 1 and 6 **characterised in that** the rake rotor (1) has a central adjusting drive.

22. A hay making machine according to claims 1 and 6 **characterised in that** the rake rotor (1) has a rotary transmission arrangement around the rotor axis (30) for transmission of the energy supply.

23. A hay making machine according to claim 22 **characterised in that** the rotary transmission arrangement for the energy supply is in the form of a pressure fluid transmission element.

24. A hay making machine according to claim 22 **characterised in that** the rotary transmission arrangement for the energy supply is in the form of an electric transmission element having at least one slip ring contact.

25. A hay making machine according to claims 1 and 6 **characterised in that** the radially outward portion (6) of the tine arm (4) has an axial transverse displacement (9).

26. A hay making machine according to claim 25 **characterised in that** the offset dimension (34) of the radially outward portion (6) of the tine arm (4) approximately corresponds to the axial transverse displacement (9).

27. A hay making machine according to claims 1 and 6 **characterised in that** at least one tine arm (4) has a pivoting device (38) for turning the outward portion (6) of the tine arm (4) relative to the longitudinal extent of the shaft (49) of the inward portion (7).

28. A hay making machine according to claim 27 **characterised in that** the pivot axis (39) of the pivoting device (38) is identical to the shape axis of the shaft (49) of the inward portion (7).

29. A hay making machine according to claim 27 **characterised in that** the pivoting device (38) has a locking device (40) for enabling the pivotal movement or for arresting the pivoting device (38).

30. A hay making machine according to claims 1 and 6 **characterised in that** at least one tine arm (4) has a pivoting device (38) for turning the outward portion (6) of the tine arm (4) relative to the longitudinal extent of the shaft (12) of the outward portion (6).

31. A hay making machine according to claim 30 **characterised in that** the universal-joint shaft profile member (17) of the shaft (12) of the outward portion (6) is twisted over a part of its longitudinal extent in accordance with the principle of a drill spindle and during the longitudinal displacement in the sense of the radial displacement (22) of the outward portion (6) the entire outward portion (6) is simultaneously correspondingly pivoted by rotation about the longitudinal axis (16).

32. A hay making machine according to claims 1 and 6 **characterised in that** the rake rotor diameter (D1) in the working position (24) is larger than the rake rotor diameter (D2) in the transport position (26).

33. A hay making machine according to claims 1 and 6 **characterised in that** the rake rotor diameter (D1) in the working position (24) is approximately in the range between 4.0 m and 5.0 m and is preferably about 4.5 m.

34. A hay making machine according to claims 1 and 6 **characterised in that** the quotient of the smallest rake rotor diameter (D2) divided by the largest rake rotor (D1) is a value within the range of about 0.9 to 0.6 and preferably is about 0.75 ± 0.25.

35. A hay making machine according to claims 1 and 6 **characterised in that** the mechanical adjusting drive (28) can be remotely operably controlled and actuated by a central control of the hay making machine from the driving cab of a tractor vehicle or a self-propelled vehicle.

## Revendications

1. Machine de fenaison comprenant au moins un corps de rotor (2) muni de rotors de râtelage (1) comportant au moins un bras porte-dents (4) équipé de dents de râtelage (3), ledit au moins un rotor de râtelage, entraîné en rotation autour d'un axe vertical, prenant appui au sol au moyen de roues d'appui et de jauge et étant prévu pour râteler un produit agricole de récolte couché au sol, et l'extension longitudinale sensiblement radiale d'un bras porte-dents étant modifiable par déplacement de la partie radialement extérieure (6) par rapport à la partie radialement intérieure (7), **caractérisée en ce que** la partie radialement extérieure (6) et la partie radialement intérieure (7) sont reliées entre elles de manière détachable au moyen d'un dispositif d'attache (10), et le dispositif d'attache (10) présente un décalage transversal axial (9), de façon que les deux parties du bras porte-dents (4) soient maintenues et guidées de manière désaxée l'une par rapport à l'autre.

2. Machine de fenaison selon la revendication 1, **caractérisée en ce que** le décalage transversal axial (9) fait partie d'un dispositif d'attache (10) présentant une glissière (11) et un dispositif de blocage (21) pour la partie radialement extérieure (6).

3. Machine de fenaison selon la revendication 1, **caractérisée en ce que** le dispositif d'attache (10) comporte une zone de recouvrement radiale (8) pour les corps (12, 49) des parties intérieure et extérieure (6, 7) d'un bras porte-dents (4).

4. Machine de fenaison selon la revendication 1, **caractérisée en ce que** le dispositif d'attache (10) est reçu de manière solidaire en rotation par la partie radialement intérieure (7) du bras porte-dents (4).

5. Machine de fenaison selon la revendication 1, **caractérisée en ce que** le corps (12) de la partie extérieure du bras porte-dents (4) est guidé et maintenu de manière solidaire en rotation par le dispositif d'attache (10).

6. Machine de fenaison selon la revendication 1, **caractérisée en ce que** le corps (12) de la partie extérieure (6) du bras porte-dents (4) est reçu et maintenu par le dispositif d'attache (10) de manière à pouvoir coulisser axialement.

7. Machine de fenaison selon la revendication 6, **caractérisée en ce que** la glissière (11) du dispositif d'attache (10) comporte une ouverture de réception (13) qui est conformée en glissière prismatique (14).

8. Machine de fenaison selon la revendication 6, **caractérisée en ce que** la glissière prismatique (14) est conformée en même temps comme dispositif antirotation (15) autour de l'axe longitudinal (16) du corps (12) du bras porte-dents (4).

9. Machine de fenaison selon la revendication 6, **caractérisée en ce que** la glissière prismatique (14) entoure par complémentarité de forme le corps (12) de la partie extérieure (6) du bras porte-dents (4).

10. Machine de fenaison selon la revendication 6, **caractérisée en ce que** la glissière prismatique (14) est conformée en profil d'arbre de transmission (17) ou en profil multi-cannelure connu en soi.

11. Machine de fenaison selon la revendication 10, **caractérisée en ce que** le corps (12) de la partie extérieure (6) est conformé en profil d'arbre de transmission (17).

12. Machine de fenaison selon la revendication 10, **caractérisée en ce que** le profil d'arbre de transmission (17) est conformé en profil creux en citron (32), en profil en étoile (33) ou en profil multi-cannelure.

13. Machine de fenaison selon la revendication 10, **caractérisée en ce que** le profil d'arbre de transmission (17) du corps (12) de la partie extérieure (6) est spiralé à la manière d'une broche de perçage sur une partie de son extension longitudinale.

14. Machine de fenaison selon la revendication 6, **caractérisée en ce que** le dispositif d'attache (10) comporte, en liaison avec la glissière prismatique (14), un dispositif de blocage (21) contre le déplacement radial (22) de la partie extérieure (6) du bras porte-dents (4).

15. Machine de fenaison selon la revendication 6, **caractérisée en ce que** la glissière prismatique (14) est conformée en dispositif de blocage (21) à réglage continu.

16. Machine de fenaison selon la revendication 6, **caractérisée en ce que** la glissière prismatique (14) présente une première position extrême (23) servant de position de travail (24) et une deuxième position extrême (25) servant de position de transport (26).

17. Machine de fenaison selon les revendications 1 et 6, **caractérisée en ce qu'**au moins un bras porte-dents (4) comporte un dispositif de coulissement (27) pour le coulissement radial (22) de la partie extérieure (6) avec un entraînement de réglage (28).

18. Machine de fenaison selon la revendication 17, **caractérisée en ce que** l'entraînement de réglage (28) est conformé en vérin à fluide sous pression (29) pouvant être soumis à un fluide.

19. Machine de fenaison selon la revendication 17, **caractérisée en ce que** l'entraînement de réglage (28) peut être actionné électriquement.

20. Machine de fenaison selon la revendication 17, **caractérisée en ce que** l'entraînement de réglage (28) est conformé en motoréducteur.

21. Machine de fenaison selon les revendications 1 et 6, **caractérisée en ce que** le rotor de râtelage (1) comporte un entraînement de réglage central.

22. Machine de fenaison selon les revendications 1 et 6, **caractérisée en ce que** le rotor de râtelage (1) comporte un passage tournant autour de l'axe de rotor (30) pour la transmission de l'alimentation en énergie.

23. Machine de fenaison selon la revendication 22, **caractérisée en ce que** le passage tournant pour l'alimentation en énergie est réalisé sous la forme d'un élément de transmission de fluide sous pression.

24. Machine de fenaison selon la revendication 22, **caractérisée en ce que** le passage tournant pour l'alimentation en énergie est réalisé sous la forme d'un élément de transmission électrique avec au moins un contact à bague collectrice.

25. Machine de fenaison selon les revendications 1 et 6, **caractérisée en ce que** la partie radialement extérieure (6) du bras porte-dents (4) présente un décalage transversal axial (9).

26. Machine de fenaison selon la revendication 25, **caractérisée en ce que** le coudage (34) de la partie radialement extérieure (6) du bras porte-dents (4) correspond approximativement au décalage transversal axial (9).

27. Machine de fenaison selon les revendications 1 et 6, **caractérisée en ce qu'**au moins un bras porte-dents (4) comporte un dispositif de pivotement (38) pour faire tourner la partie extérieure (6) du bras porte-dents (4) par rapport à l'extension longitudinale du corps (49) de la partie intérieure (7).

28. Machine de fenaison selon la revendication 27, **caractérisée en ce que** l'axe de pivotement (39) du dispositif de pivotement (38) est identique à l'axe de la figure du corps (49) de la partie intérieure (7).

29. Machine de fenaison selon la revendication 27, **caractérisée en ce que** le dispositif de pivotement (38) comporte un dispositif de verrouillage (40) pour autoriser le mouvement de pivotement ou pour bloquer le dispositif de pivotement (38).

30. Machine de fenaison selon les revendications 1 et 6, **caractérisée en ce qu'**au moins un bras porte-dents (4) comporte un dispositif de pivotement (38) pour faire tourner la partie extérieure (6) du bras porte-dents (4) par rapport à l'extension longitudinale du corps (12) de la partie extérieure (6).

31. Machine de fenaison selon la revendication 30, **caractérisée en ce que** le profil d'arbre de transmission (17) du corps (12) de la partie extérieure 6 est spiralé selon le principe d'une broche de perçage sur une partie de son extension longitudinale, et **en ce que**, pendant le coulissement longitudinal au sens du coulissement radial (22) de la partie extérieure (6), l'ensemble de la partie extérieure (6) pivote en même temps de manière correspondante par rotation autour de l'axe longitudinal (16).

32. Machine de fenaison selon les revendications 1 et 6, **caractérisée en ce que** le diamètre de rotor de râtelage (D1) est plus grand dans la position de travail (24) que le diamètre de rotor de râtelage (D2) dans la position de transport (26).

33. Machine de fenaison selon les revendications 1 et 6, **caractérisée en ce que** le diamètre de rotor de râtelage (D1) dans la position de travail (24) est approximativement compris entre 4,0 m et 5,0 m et, de préférence, égal à 4,5 m.

34. Machine de fenaison selon les revendications 1 et 6, **caractérisée en ce que** le quotient du plus petit diamètre de rotor de râtelage (D2) divisé par le plus grand diamètre de rotor de râtelage (D1) possède une valeur approximativement comprise entre 0,9 et 0,6 et est, de préférence, approximativement égal à 0,75 ± 0,25.

35. Machine de fenaison selon les revendications 1 et 6, **caractérisée en ce que** l'entraînement de réglage mécanique (28) peut être commandé et actionné par une commande centrale de la machine de fenaison ou par télécommande depuis la cabine de conduite d'un tracteur ou d'un automoteur.
